# EUROPEAN PATENT APPLICATION

(11) **EP 4 537 671 A1**
(43) Date of publication of application: **16.04.2025**
(21) Application number: 24205820.4
(22) Date of filing: 10.10.2024
(51) Int. Cl.: A23G 9/08, A23G 9/20, A23G 9/22, A23C 13/00, A23P 30/40, A47J 43/12, A23C 13/12, A47J 43/04

(54) **MACHINE FOR MAKING AND DISPENSING FOOD EMULSIONS**

(30) Priority: 12.10.2023 IT 202300021252
(71) Applicant: Ali Group S.r.l. - Carpigiani, 20063 Cernusco sul Naviglio, Milano (IT)
(72) Inventor: LAZZARINI, Roberto, 42100 Reggio Emilia (IT); TASSI, Federico, 40122 Bologna (IT)
(74) Representative: Milli, Simone

(57) **Abstract**

A machine for making and dispensing food emulsions, comprising:
- at least one containment body (2);
- a tank (3) located inside the containment body (2) and provided with walls having an outside surface (30);
- a container (4) for holding the product to be emulsified, which is inside the tank (3);
- a processing system (5) for processing the product which is inside the tank (3) and comprising at least one product processing circuit (50), a pump (51) connected to the container (4), and a texturizer (52), the product passing along the processing circuit (50) in order: the pump (51) and the texturizer (52);
- a dispensing duct (6) connected to the texturizer (51) and having a dispensing port (61) for dispensing the emulsified product;
- a cooling chamber (20) for cooling the tank (3), extending around the tank (3) between the outside surface (30) of the tank (3) and the containment body (2), the cooling chamber (20) being configured to enclose the evaporator (71) within it.

## Description

This invention relates to a machine for making, and dispensing food emulsions.

In particular, this invention relates to machines for making and dispensing food emulsions such as, for example, whipped cream, semifreddo, sweet and savoury creams and mousse.

The principles of emulsions technology are commonly used in the food industry to create a wide variety of products. Food emulsions vary significantly their rheological behaviours depending on the nature of the food: in effect, they may be viscous liquids, viscoelastic liquids, viscoelastic solids, plastics or elastic solids based on their compositions, structures and interactions. The nature of the emulsions gives foods specific functional characteristics such as appearance, consistency, texture and desirable aromatic profiles.

From a chemical-physical point of view, an emulsion is a mixture of two or more liquids which cannot usually be mixed together which, by means of specific transformation processes, adopt a homogeneous aspect at a macroscopic level whilst maintaining a heterogeneous aspect at a microscopic level.

Generally speaking, an emulsion is, therefore, a liquid nebulized in the form of droplets, dispersed phase, dispersed in another liquid, continuous phase, and it is characterised by a non-static and thermodynamically unstable internal structure. In effect, the two phases may return to a different and separate form due to a natural tendency to the dissociation of the liquid-liquid system.

In general, the stability of an emulsion can be defined as the capacity of the system to resist changes of its chemical-physical properties over time. If the emulsion is not stable there can be a series of phenomena, from coalescence to flocculation, which can lead to the formation of breakages and creams.

The stability of an emulsion may be influenced by various factors including, for example, the lowering of the interfacial energy and the force of the interfacial film.

The interfacial tension forces attempt to keep the two phases separate and, therefore, the aim in preparing the emulsions is to reduce the interfacial tension to favour the dispersion and maintain a stable structure. This result is achieved in two main ways: increasing the viscosity of the internal phase and/or by using chemical additives.

The stability of an emulsion may be modified by acting directly on the recipe of the food product by using stabilising ingredients. By positioning themselves at the interface of the two phases, these ingredients lower the surface tension between the phases.

It should be borne in mind that this may in some cases cause undesired side effects such as excessive increases in viscosity and, consequently, adversely affect processing phases.

An alternative to the changes in the composition of the product is to intervene on the production process by optimising storage and production conditions. The storage of the product at an optimum temperature, which allows an increase in viscosity, may eliminate or at least reduce the risk of separating/creaming phenomena without intervening on the composition of the food product.

In the case of oil emulsions in water, such as cream or ice cream, for example, the less dense fat of the water will tend to separate/cream over time. The speed at which this separation occurs is in accordance with Stoke's law and is a function of the difference in density between fat and water, the size of the globules of fat and the viscosity of the continuous phase.

The process which starting from a liquid product leads to an emulsified product coincides with the processing step called texturizing. During this step the product undergoes the main chemical physical modifications which affect the quality of the emulsion obtained. During the production of whipped cream, for example, the agitation causes only a partial breakage of the fat globules which are arranged around the air bubbles, thus separating them from the aqueous phase and keeping them immersed in it.

One of the variables which affects the quality and stability of the finished emulsion is therefore linked to quantity and stability of air incorporated during the processing/texturizing step. The process by which the air is positioned inside the network of fats dispersed in the liquid phase in an oil water emulsion takes the name of destabilisation of the fat. If this phase is not sufficiently promoted, the resulting product will have unstable forms with high melting speeds. Similarly, if the destabilisation phase is too marked the product will not be able to incorporate sufficient air to stabilise the final structure of the product.

The stability and the quality of the emulsified products are, therefore, greatly conditioned by the storage and processing conditions to which the starting mixture is subjected.

Consequently, it is important to monitor, in real time, the properties of the emulsion and make adaptive modifications by varying the operating parameters of the machine and/or its components, e.g. flow rate, pressure, temperature, time, etc.

The search for an optimum stability, by lowering the interface surface tension in the emulsion between the fat phase and the liquid phase is of primary importance in order to obtain an optimum destabilisation of the fat phase during texturizing or freezing.

Cooling the product is therefore the easiest way to achieve an increase in the viscosity because most liquids become more viscous when cooled. The decrease in viscosity is usually accompanied by a decrease in interfacial tension, which leads to a better emulsification.

As described, the food emulsions are extremely complex products which require suitable processing steps and suitable equipment to be able to control them.

A need felt in the sector is that of providing a machine for processing and dispensing food emulsions which guarantees the stability of the emulsion being processed up to the dispensing point.

A further need is that of providing a machine for processing and dispensing food emulsions which guarantees an optimum and uniform temperature of the food product being processed up to the dispensing point.

A further need is that of providing a machine for processing and dispensing food products which can guarantee high performance levels with regard to transferring heat with the product being processed.

The aim of the invention is to provide a machine for processing and dispensing food products which meets the above-mentioned needs.

In particular, the aim of this invention is to provide a machine for processing and dispensing food emulsions which is able to guarantee the stability of the emulsion and to make the temperature uniform in a particularly efficient manner up to the dispensing point, guaranteeing high performance levels of heat exchange between the machine and the food product being processed.

Said aim is fully achieved by the machine according to this invention, as characterised in the appended claims.

The features of the invention are clearly described in the claims below and its advantages are more apparent from the detailed description which follows, with reference to the accompanying drawings which illustrate a preferred, non-limiting example embodiment of the invention and in which:

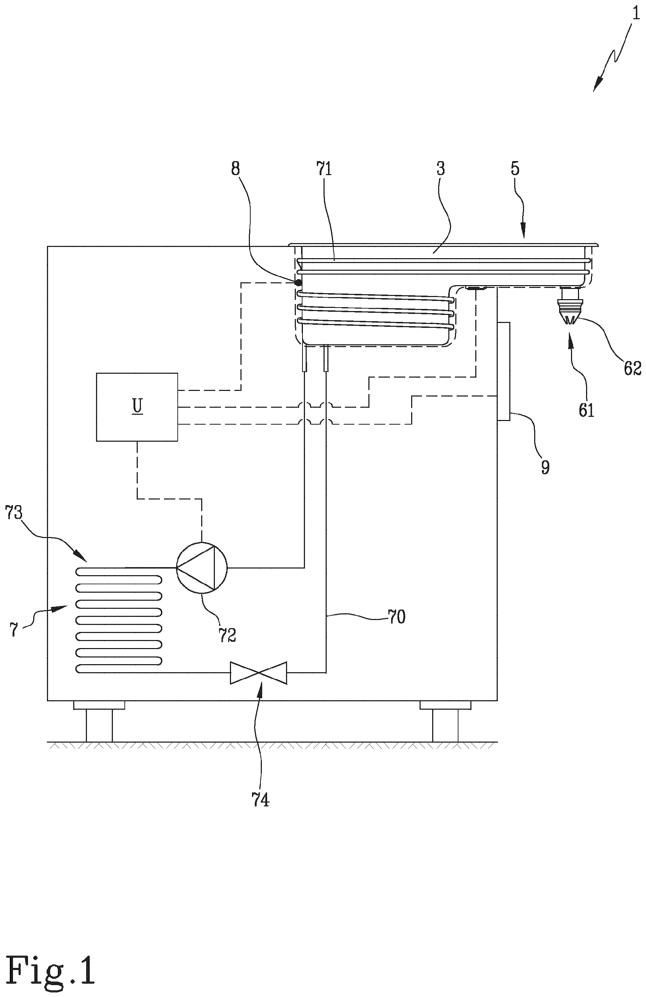

- Figure 1 shows a schematic front view of a machine according to the invention;

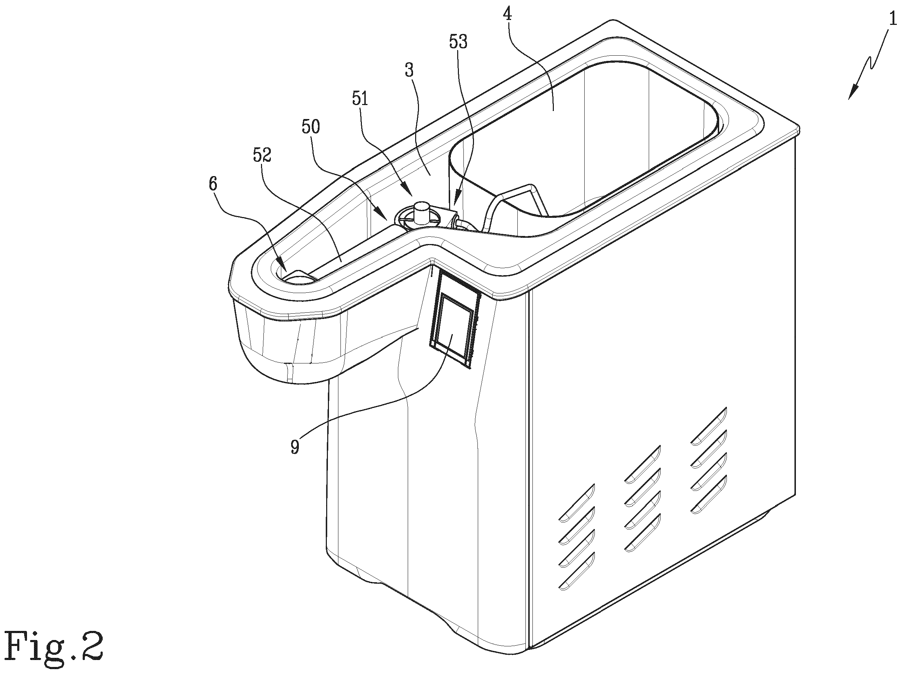

- Figure 2 shows a schematic perspective view of the machine according to the invention;

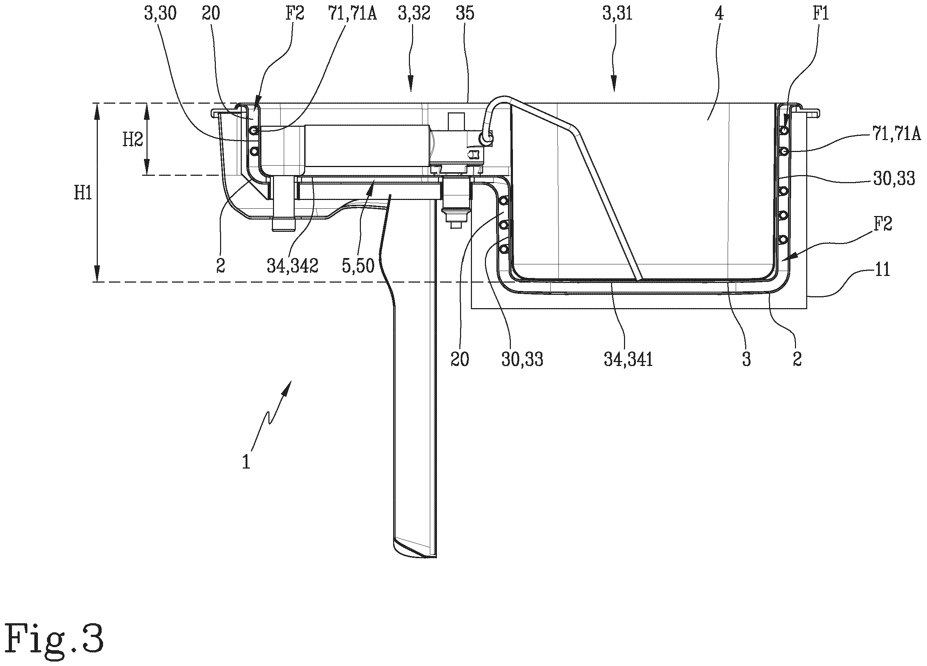

- Figure 3 shows a schematic cross-section view of a detail of the machine according to the invention;

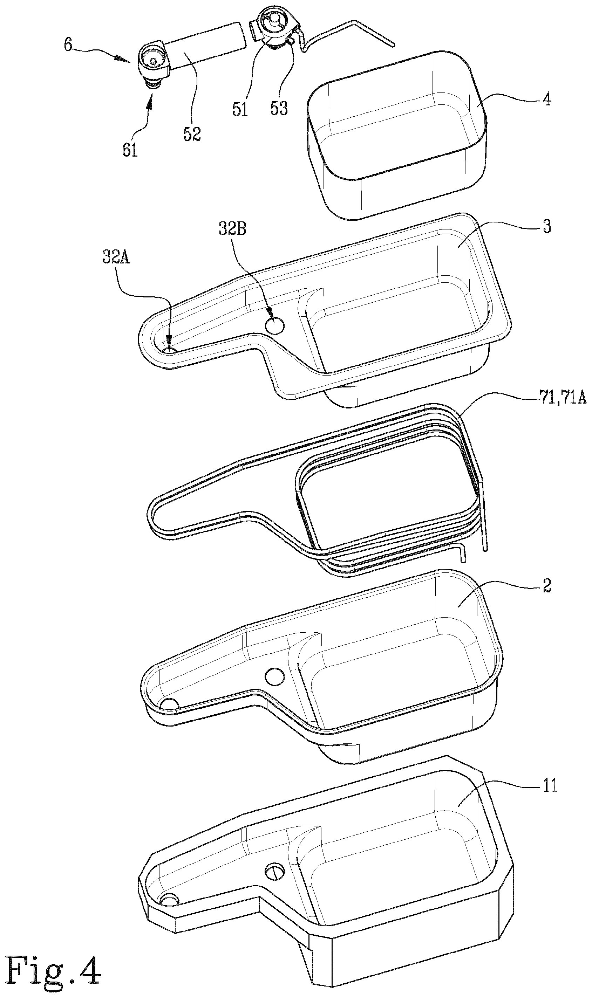

- Figure 4 shows a schematic exploded view of a detail of the machine according to the invention.

It should be noted that the drawings are schematic and are therefore not representative of the actual dimensions of the system.

With reference to the accompanying drawings, the numeral 1 denotes in its entirety a machine for processing food products, in particular for making, treating and dispensing food emulsions.

The above-mentioned food emulsions may be, for example, whipped cream, creams and the like.

According to the invention, the machine 1 for processing liquid or semiliquid products, hereinafter also referred to simply as the "machine 1", comprises at least one containment body 2 and a tank 3 located inside the containment body 2.

The tank 3 has walls with an outside surface 30.

According to an aspect, the machine 1 comprises an insulating body 11 configured to contain the containment body 2 for thermally insulating it from the outside.

The machine 1 may comprise a removable lid at the top, not illustrated in the accompanying drawings, to prevent access to the tank 3.

The machine 1 comprises a container 4 for holding the product to be emulsified, located inside the tank 3.

According to a preferred embodiment, the container 4 is removable.

In other words, it is possible to remove the container 4 from the tank 3 and re-insert it into the tank 3 according to requirements.

Advantageously, the possibility of removing the container 4 from the tank 3 facilitates its cleaning operations.

According to this invention, the machine 1 comprises a system 5 for processing the product positioned inside the tank 3.

The processing system 5 comprises at least one product processing circuit 50, a pump 51 connected to the container 4, and a texturizer 52.

The product passes along the processing circuit 50 in the order: the pump 51, the texturizer 52.

The pump 51 is configured for extracting the product from the container 4 and to push the product towards the texturizer 52.

Preferably, the product to be emulsified sucked by the pump 51 is in a liquid form, for example, liquid cream.

According to an embodiment, the pump 51 is a volumetric pump, in particular a rotary volumetric pump capable of varying the rotation frequency and, consequently, the delivery flow rate and/or pressure of the food product to be sent to the texturizer 52.

The volumetric pump may be of the vane or impeller type.

The machine 1 comprises a motor, not illustrated in the accompanying drawings, configured to drive the pump 51.

The texturizer 52 is preferably a texturizer tube.

Preferably, the processing system 5 comprises an adjustment valve 53 positioned along the processing circuit 50.

The adjustment valve 53 is configured for adjusting a quantity of air introduced into the processing circuit 50.

According to an embodiment, the adjustment valve 53 is manual.

The machine 1 comprises an actuator, not illustrated in the accompanying drawings, configured for introducing air in the processing circuit 50 through the adjustment valve 53.

In particular, the air introduced into the processing circuit 50 by means of the adjustment valve 53 is joined to the product sucked by means of the pump 51.

In order to better illustrate, air is fed into the circuit 50 by means of the adjustment valve 53 and the liquid product is sucked out of the container 4 by means of the pump 51.

The pump 51 is configured to push the air and product towards the texturizer 52 along the processing circuit 50.

The texturizer 52 allows the mixture composed of liquid product and air to increase in volume.

In particular, the adjustment valve 53 is configured for adjusting the quantity of air per unit of liquid product.

Advantageously, adjusting the quantity of air per unit of liquid allows the increase in volume in the final product to be controlled.

Considering the example wherein the container 4 contains liquid cream, adjusting the quantity of air per unit of liquid cream allows the increase in volume of the final whipped cream to be controlled.

According to the invention, the machine 1 comprises a dispensing duct 6 connected to the texturizer 52.

To clarify better, the processing circuit 50 leads into the dispensing duct 6: the texturized product feeding out of the texturizer 52 enters the dispensing duct 6.

Preferably, at least one portion of the dispensing duct 6 is located inside the tank 3.

The dispensing duct 6 has a dispensing port 61 for dispensing the emulsified product.

According to a preferred embodiment, the dispensing port 61 is adjustable. Advantageously, the adjustable dispensing port 61 allows the texturizing and the form of the end product to be modified.

According to an aspect of the invention, the dispensing duct 6 comprises a dispensing nozzle 62 for adjusting the opening of the dispensing port 61. The dispenser outlet 62 is, preferably, removable.

Advantageously, the dispensing nozzle 62 can be replaced with another dispensing nozzle 62 of different shape, for example for adjusting the opening of the dispensing port 61.

In other words, the dispensing port 61 may be adjusted by replacing the dispensing nozzle 62 with another dispensing nozzle 62 with a different shape.

Advantageously, the replaceable dispensing nozzle 62 allows rapid modification of the texturizing and form of the end product. Advantageously, the possibility of removing the dispensing nozzle 62 facilitates the cleaning operations.

According to this invention, the machine 1 comprises a refrigeration system 7.

The refrigeration system 7 comprises a closed circuit 70 configured for circulating a first heat exchanger fluid F1, an evaporator 71, a compressor 72, a condenser 73 and a throttle element 74.

The first heat exchanger fluid F1 flows in the closed circuit 70 through the following: the evaporator 71, the compressor 72, the condenser 73 and the throttle element 74, in that order.

Preferably, the first heat exchanger fluid F1 consists of CO2 or propane. The evaporator 71 is in contact with the outside surface 30 of the walls of the tank 3 in order to cool the walls of the tank 3.

Preferably, the tank 3 has a lateral surface 33 and the evaporator 71 is in contact with the lateral surface 33 of the tank 3.

Preferably, the lateral surface 33 of the tank 3 has flat walls.

According to a preferred embodiment, the evaporator 71 is a coil 71A. Preferably, the coil 71A extends around the lateral surface 33 of the tank 3.

The evaporator 71 comprises ducts coiled in a helical fashion in the shape of the tank 3.

According to a preferred embodiment, the tank 3 comprises a first portion 31 having, along the vertical, a first depth H1 and a second portion 32 having, along the vertical, a second depth H2.

The first depth H1 is greater than the second depth H2.

To clarify better, the tank 3 has a bottom wall 34 and an upper edge 35 which delimits the perimeter for access to the tank 3 itself. The bottom wall 34 of the tank 3 comprises a first bottom wall 341, at the first portion 31, and a second bottom wall 342, at the second portion 32: the distance between the upper edge 35 and the first bottom wall 341 corresponds to the first depth H1 and the distance between the upper edge 35 and the second bottom wall 342 corresponds to the second depth H2.

Preferably, the container 4 is located at the first portion 31 of the tank 3 and the processing system 5 is located at the second portion 32 of the tank 3.

According to an embodiment, the container 4 is defined by a portion of the tank 3.

In particular, according to this embodiment, the container 4 is defined by the first portion 31 of the tank 3.

Advantageously, the evaporator 71 in contact with the outside surface of the tank 3 allows a heat exchange with the product being processed, for making and dispensing the emulsion, from the container 4 to the texturizer 51 or to the dispensing duct 6, that is to say, up to the point of dispensing the finished product.

According to an aspect of the invention, the second portion 32 has a first opening 32A configured to receive the dispensing duct 6.

In other words, the dispensing duct 6 passes through the first opening 32A.

According to an aspect of the invention, the second portion 32 has a second opening 32B configured for receiving connection and transmission elements between the components of the processing system 5 and respective motors. In other words, the connection and transmission elements pass through the second opening 32B.

It should be noted that the containment body 2 and the insulating body 11 also have respective openings at the first opening 32A and the second opening 32B.

According to this invention, the machine 1 comprises a chamber 20 for cooling the tank 3.

In particular, according to an aspect of the invention, the refrigeration system 7 comprises the cooling chamber 20 of the tank 3.

The cooling chamber 20 extends around the tank 3 between the outside surface 30 of the tank 3 and the containment body 2.

In other words, the cooling chamber 20 corresponds substantially to the space defined between the containment body 2 and the outside surface 30 of the tank 3.

The cooling chamber 20 is configured to enclose the evaporator 71 within it.

To clarify better, the evaporator 71 is inside the cooling chamber 20 and is located between the containment body 2 and the outside surface 30 of the tank 3.

It should be noted that the cooling chamber 20 surrounds the entire tank 3 and, therefore, both the first portion 31 of the tank 3 and the second portion 32 of the tank 3.

In other words, the cooling chamber 20 surrounds the tank 3 both at the container 4 and at the processing system 50.

According to an aspect of the invention, the cooling chamber 20 is permeated with a second heat exchanger fluid F2 to increase the thermal inertia of the evaporator 71.

Basically, the second heat exchanger fluid F2 defines a mass of heat exchanger fluid, substantially limited to the interior of a chamber which is closed, as is the cooling chamber 20, thus increasing the thermal inertia and, in practice, making the cooling of the tank 3 more stable and efficient. To better clarify, the evaporator 71 is immersed in the second heat exchanger fluid F2 to ensure optimal heat exchange between the first heat exchanger fluid F1, which is circulating in the evaporator 71, and the inside surface of the tank 3.

The second heat exchanger fluid F2 is preferably a diathermal fluid such as, for example, an ethylene glycol or a propylene glycol.

The exchanging of heat between the first heat exchanger fluid F1 and the product occurs as follows.

The evaporator 71 exchanges heat with the tank 3 by direct contact (in some zones) with the outside surface 30 of the tank 3 itself and also exchanges heat with the second heat exchanger fluid F2, thus cooling the second heat exchanger fluid F2 and also cooling certain zones of the outside surface 30. By conduction, the cooling of the outside surface 30 also allows the inside surface of the tank 3 to be cooled and, consequently, both the container 4 and the elements of the processing system 5. By conduction, the cooling of the container 4 and of the elements of the processing system 5 also allows the product contained therein to be cooled.

It should be noted that the action of the second heat exchanger fluid F2 thus enhances the overall efficiency of heat exchange between the evaporator 71 and the inside surface of the tank 3 and, consequently, between the evaporator 71 and the product (otherwise heat exchange would occur only at the point of contact between the evaporator 71 and the outside surface 30 of the walls of the tank 3).

In other words, the heat exchange with the product being processed is optimised for the entire production and dispensing of the emulsion starting from the container 4 to the texturizer 52 or to the dispensing duct 6. Advantageously, the heat exchange with the product being processed is optimised in every portion of the machine 1 containing the product. Advantageously, in particular, the heat exchange with the product is optimised up to the point of dispensing the emulsified product. Advantageously, the cooling chamber 20 permeated by the second heat exchanger fluid F2 allows the temperature of the product being processed to be rendered uniform up to the dispensing point.

Preferably, the cooling chamber 20 permeated by the second heat exchanger fluid F2 is configured to keep constant the temperature of the final product emulsified within a range of between -5°C and 10°C, more preferably between -1°C and 7°C.

According to an aspect of the invention, the second heat exchanger fluid F2 is in contact with the outside surface 30 of the tank 3 in order to cool the walls thereof.

It should be noted that, thanks also to the second heat exchanger fluid F2, the cooling of the outside surface 30 of the tank 3 by contact occurs over the entire outside surface 30, advantageously increasing heat exchange.

To better clarify, the second heat exchanger fluid F2 provides thermal inertia; in effect, this fluid defines a mass of liquid which, being at a predetermined temperature, is capable of making the temperature of the product inside the tank 3 uniform and stable.

Advantageously, the cooling of the tank 3 by means of the second heat exchanger fluid F2, located inside the cooling chamber 20, ensures greater uniformity compared to cooling solely via the evaporator 71. In effect, the heat exchanger fluid F2 is diffused inside the entire cooling chamber 20 and thus ensures that, inside the cooling chamber 20, heat is transferred to all the parts of the outside surface 30 of the tank 3 which are not in direct contact with the evaporator 71. The result is an improved capability of making the temperature uniform over the entire inside surface of the container 3.

Preferably, the second heat exchanger fluid F2 is in contact with a portion of the outside surface 30 of the tank 3 corresponding to the lateral surface 33 of the tank 3.

According to an aspect of the invention, the machine 1 comprises a control unit U configured to control at least the refrigeration system 7.

In particular, the control unit U is configured to control the drive of the compressor 72.

According to an embodiment, the control unit U is configured for controlling the adjustment valve 53.

According to this embodiment, the adjustment valve 53 is a solenoid valve and the control unit U is configured for controlling the adjustment valve 53 for adjusting the flow of air introduced in the processing circuit 50.

The control unit U is preferably configured to control the actuator configured for introducing air in the processing circuit 50 through the adjustment valve 53.

The control unit U may be configured to control the pump 51, to adjust the flow of product drawn from the container 4 and push the product towards the texturizer 52.

According to an aspect of the invention, the machine 1 comprises a temperature sensor 8, mounted inside the cooling chamber 20.

The temperature sensor 8 is configured to measure a temperature of the second heat exchanger fluid F2.

The temperature sensor 8 is connected to the control unit U to send it a signal relating to the temperature of the second heat exchanger fluid F2.

According to an aspect of the invention, the control unit U is configured to control the refrigeration system 7 as a function of the signal received from the temperature sensor 8 relating to the temperature of the second heat exchanger fluid F2.

In particular, the control unit U is configured to control the compressor 72 as a function of the signal received from the temperature sensor 8 relating to the temperature of the second heat exchanger fluid F2.

Advantageously, the control unit U, by controlling the compressor 72, can control the circulation of the first heat exchanger fluid F1 in the closed circuit 70.

Advantageously, controlling the refrigeration system 7 using the control unit U allows the temperature of the product being processed to be controlled and therefore to guarantee the stability of the emulsion being processed.

Advantageously, controlling the refrigeration system 7 using the control unit U as a function of the signal received from the temperature sensor 8 makes it possible to adjust the temperature of the emulsion being processed automatically or semi-automatically.

According to an embodiment, the machine 1 comprises a user interface 9 which is connected to the control unit U.

The user interface 9 comprises at least one user operable control.

The user interface 9 preferably comprises a plurality of user operable controls.

Preferably, the user interface 9 comprises user-operable activation and selection controls and/or pushbuttons.

Advantageously, the user interface 9 allows information to be displayed, also in real time, relating to the machine 1 and/or to the product being processed, such as, for example, the temperature of the second heat exchanger fluid F2.

Advantageously, by means of the user interface 9, together with the control unit U, it is possible to control various aspects of the machine 1 such as, for example, power supply and power of the compressor 72, for adjusting the temperature of the emulsion, the adjustment valve 53, for adjusting the flow of air introduced into the processing circuit 50, the actuator configured for introducing air into the processing circuit 50 through the adjustment valve 53, the operation of the pump 51 by means of the respective motor, for adjusting the flow of product sucked from the container 4 and pushing the product towards the texturizer 52. Advantageously, the user interface 9, together with the control unit U, allows an operator to enter different thermal cycles to perform a plurality of different preparations.

## Claims

1. A machine for making and dispensing food emulsions, comprising:
- at least one containment body (2);
- a tank (3) located inside the containment body (2) and provided with walls having an outside surface (30);
- a container (4) for holding the product to be emulsified, which is inside the tank (3);
- a processing system (5) for processing the product which is inside the tank (3) and comprising at least one product processing circuit (50), a pump (51) connected to the container (4), and a texturizer (52);
- a dispensing duct (6) connected to the texturizer (51) and having a dispensing port (61) for dispensing the emulsified product;
- a refrigeration system (7), comprising: a closed circuit (70) configured for circulating a first heat exchanger fluid (F1), an evaporator (71), a compressor (72), a condenser (73) and a throttle element (74), the first heat exchanger fluid (F1) flowing in the closed circuit (70) through the following: the evaporator (71), the compressor (72), the condenser (73) and the throttle element (74), in that order; the evaporator (71) being in contact with the outside surface (30) of the walls of the tank (3) in order to cool the walls of the tank (3);
- a cooling chamber (20) for cooling the tank (3), extending around the tank (3) between the outside surface (30) of the tank (3) and the containment body (2), the cooling chamber (20) being configured to enclose the evaporator (71) within it.

2. The machine according to the preceding claim, wherein the cooling chamber (20) is permeated with a second heat exchanger fluid (F2) to increase the thermal inertia of the evaporator (71).

3. The machine according to the preceding claim, wherein the second heat exchanger fluid (F2) is in contact with the outside surface (30) of the tank (3) in order to cool the walls thereof.

4. The machine according to any one of the preceding claims, wherein the pump (51) is a volumetric pump configured for extracting the product from the container (4) and to push the product towards the texturizer (52).

5. The machine according to any one of the preceding claims, wherein the dispensing port (61) is adjustable.

6. The machine according to the preceding claim, wherein the dispensing duct (6) comprises a dispensing nozzle (62) configured to adjust the dispensing port (61), the dispensing nozzle (62) being removable.

7. The machine according to any one of the preceding claims, wherein the processing system (5) comprises an adjustment valve (53) located along the product processing circuit (50) and configured to adjust a quantity of air fed into the processing circuit (50).

8. The machine according to any one of the preceding claims, comprising a control unit (U) configured to control the refrigeration system (7) at least.

9. The machine according to claims 7 and 8, wherein the control unit (U) is configured to control the adjustment valve (53) and/or the pump (51).

10. The machine according to claim 3 and either of claims 8 or 9, comprising a temperature sensor (8), located inside the cooling chamber (20), to detect a temperature of the second heat exchanger fluid (F2), the temperature sensor (8) being connected to the control unit (U) to send it a signal relating to the temperature of the second heat exchanger fluid (F2).

11. The machine according to the preceding claim, wherein the control unit (U) is configured to control the refrigeration system (7) as a function of the signal received from the temperature sensor (8) relating to the temperature of the second heat exchanger fluid (F2).

12. The machine according to any one of claims 8 to 11, comprising a user interface (9) connected to the control unit (U), the user interface (9) comprising at least one user activable control.

13. The machine according to any one of the preceding claims, wherein the tank (3) comprises a first portion (31) having a first depth (H1) along the vertical, and a second portion (32) having a second depth (H2) along the vertical, the first depth (H1) being greater than the second depth (H2).

14. The machine according to the preceding claim, wherein the container (4) is located at the first portion (31) of the tank (3) and the processing system (5) is located at the second portion (32) of the tank (3).

15. The machine according to any one of the preceding claims, wherein the evaporator (71) comprises a coil (71A).

16. The machine according to the preceding claim, wherein the tank (3) has a lateral surface (33) and wherein the coil (71A) extends around the lateral surface (33) of the tank (3).

17. The machine according to any one of the preceding claims, wherein the container (4) is removable.
